# FASCICULE DE BREVET EUROPEEN

(11) **EP 3 829 975 B1**
(45) Date de publication et mention de la délivrance du brevet: **11.01.2023**
(21) Numéro de dépôt: 19759655.4
(22) Date de dépôt: 26.07.2019
(51) Int. Cl.: B64C 21/02, B64C 11/48, F04D 29/68, F04D 19/02, F04D 29/32, B64D 27/00

(54) **TURBOMACHINE À HÉLICES COAXIALES**
TURBOMASCHINE MIT KOAXIALEN PROPELLERN
TURBOMACHINE WITH COAXIAL PROPELLERS

(30) Priorité: 03.08.2018 FR 1857285
(43) Date de publication de la demande: 09.06.2021
(73) Titulaire: SAFRAN AIRCRAFT ENGINES, 75015 Paris (FR)
(72) Inventeur: DUBOIS, Adrien, 77550 MOISSY-CRAMAYEL (FR); BINDER, Anthony, 77550 MOISSY-CRAMAYEL (FR); VION, Laurence, Francine, 77550 MOISSY-CRAMAYEL (FR)
(74) Mandataire: Gevers & Orès
(86) Numéro de dépôt international: PCT/FR2019/051856
(87) Numéro de publication internationale: WO 2020/025886

(56) Documents cités:
- EP-A2- 2 090 765
- FR-A1- 2 866 931
- US-A- 2 156 133
- US-A1- 2011 083 417

## Description

### DOMAINE TECHNIQUE

La présente invention concerne une turbomachine du type à hélices coaxiales, telles que carénées ou non carénées (en langue anglaise « open rotor » ou « unducted fan »).

### ETAT DE L'ART

L'état de la technique comprend, notamment les documents EP-A1-2090765, FR-A2-2866931 et US-A-2156133. En particulier, le document EP-A1-2090765 décrit un système de propulsion contre rotatif ayant deux hélices non caranees montées en rotation l'une derrière l'autre. L'helice amont comprenant des canaux de distribution.

La tendance actuelle concernant les moteurs d'aéronefs civils est de réduire la consommation spécifique (CS), les pollutions sonores et les émissions de NOx. Une des solutions techniques adoptée par les motoristes consiste à augmenter le taux de dilution entre le flux primaire et le flux secondaire. A ce titre, plusieurs architectures comme les moteurs « UHBR » en langue anglaise (Ultra High Bypass Ratio) et les moteurs à doublets d'hélices (« CROR » pour Counter Rotating Open-Rotor en langue anglaise, ou « USF » pour Unducted Single Fan en langue anglaise) sont envisagées en remplacement potentiel des turbomachines actuelles pour les vols moyens courriers.

La nacelle, qui canalise le flux secondaire pour produire la majorité de la poussée sur une turbomachine classique, est retirée dans le cas d'une turbomachine du type open rotor. Le système propulsif se compose alors d'une hélice amont qui entraîne l'écoulement et d'une hélice aval, fixe pour le moteur « USF » et tournante pour le moteur « CROR », l'hélice aval permettant de redresser l'écoulement. Le rendement propulsif du moteur est amélioré en récupérant l'énergie en rotation. Le diamètre des hélices est aussi fortement augmenté pour permettre l'aspiration de quantité d'air importantes et améliorer le rendement propulsif. Cependant, en l'absence de nacelle, les émissions sonores sont un inconvénient majeur de cette architecture open rotor, et particulièrement le bruit généré par les hélices et par les diverses interactions entre les hélices et les composants liés au montage du moteur sur l'avion.

La source principale du bruit est liée à l'interaction du tourbillon issu de l'hélice amont avec l'hélice aval. Le tourbillon de tête est issu de la fusion d'un tourbillon de bout d'aube avec un tourbillon de bord d'attaque qui se développe depuis le ventre de l'extrados de l'aube amont.

Une solution pour supprimer ce bruit, appelée « clipping », consiste à réduire le diamètre externe de l'hélice aval de façon à ce que les tourbillons générés par l'hélice amont passent à l'extérieur de l'hélice aval, en particulier à l'extérieur du cylindre formé par l'hélice aval en rotation, et n'interagissent pas avec celle-ci. Cependant, cette solution n'est pas totalement satisfaisante car elle se traduit par une réduction de la poussée produite par l'hélice aval et donc une diminution des performances de la turbomachine. Il serait possible d'augmenter la charge de l'hélice aval pour compenser la réduction de son diamètre, mais cette hélice deviendrait alors mécaniquement plus complexe à réaliser et elle générerait un bruit propre plus important.

L'invention a notamment pour but d'apporter une solution, simple, efficace et économique à ce problème.

### EXPOSE DE L'INVENTION

L'invention a ainsi pour objet une turbomachine, d'axe longitudinal, comprenant deux hélices externes coaxiales et, respectivement amont et aval.

Dans la turbomachine selon l'invention, au moins certaines des aubes de l'hélice amont comprennent au moins une cheminée interne de circulation d'air communiquant d'une part avec des orifices de prélèvement d'air dans les couches limites des aubes, et communiquant d'autre part à son extrémité radialement externe avec des orifices de sortie d'air, les orifices de prélèvement d'air débouchant au niveau d'entrées d'orifices sur les extrados des aubes, les entrées des orifices de prélèvement d'air étant situés radialement uniquement dans une zone comprise entre 10% et 45% de la dimension radiale des aubes, mesurée au-dessus et depuis la hauteur radiale des aubes pour laquelle la tangente du bord d'attaque est orthogonale à l'axe longitudinal, les entrées des orifices de prélèvement d'air étant situées uniquement dans une zone comprise entre 0% et 30%, de préférence entre 10% et 30%, de la corde locale des aubes, mesurée à la hauteur desdites entrées et depuis les bords d'attaque des aubes.

Ainsi, le positionnement spécifique des entrées des orifices de prélèvement d'air permet de réduire à la source l'intensité du tourbillon qui se développe au niveau de l'hélice amont en le prélevant avant qu'il ne se lie au tourbillon de tête des aubes.

Les orifices de prélèvement d'air sont situés radialement en dessous des orifices de sortie d'air et sont reliés à ces derniers par des cheminées sensiblement radiales formées à l'intérieur des aubes. Les cheminées peuvent présenter une autre disposition, comme par exemple un cheminement en zigzag à l'intérieur des aubes. Les orifices de prélèvement sont donc situés à des rayons ou des distances radiales de l'axe du moteur qui sont inférieurs à ceux des orifices de sortie de façon à ce qu'il y ait une différence de pression suffisante entre l'entrée et la sortie des cheminées internes des aubes. En fonctionnement, les forces centrifuges et les différences de pression entre les zones de prélèvement et de sortie de l'air sont suffisantes pour que l'air prélevé soit acheminé à travers les cheminées des aubes jusqu'aux orifices de sortie. L'air qui sort de ces orifices est évacué à l'extérieur des aubes de l'hélice amont et permet de détruire la cohérence des tourbillons de faible intensité générés par cette hélice.

L'invention ne nécessite donc pas de modifier les dimensions des hélices amont et aval qui peuvent avoir sensiblement le même diamètre externe.

Le prélèvement d'air est réalisé sur les extrados des aubes où les turbulences dans les couches limites sont les plus importantes. En variante, les orifices de prélèvement d'air peuvent déboucher sur les intrados des aubes, voire à la fois sur les intrados et les extrados des aubes. La pression de l'air sur les intrados des aubes a l'avantage d'être plus importante que sur leurs extrados. Cependant, les couches limites sur les intrados sont en général plus saines. Le prélèvement d'air sur les intrados des aubes n'est donc pas toujours nécessaire.

Selon l'invention, les entrées des orifices de prélèvement d'air sont disposés uniquement dans lesdites zones H1 et L1 des aubes de l'hélice amont.

Ladite au moins une cheminée interne de circulation d'air peut être sensiblement radiale.

Les orifices de prélèvement d'air peuvent avoir une section allongée ou oblongue.

Les orifices de sortie d'air peuvent déboucher à l'extérieur des aubes au niveau de sorties d'orifices, lesdites sorties d'orifices étant situées dans une zone comprise entre 0% et 60% (de préférence de 0% à 15%) de la corde locale des aubes, mesurée à la hauteur desdites sorties et depuis les bords d'attaque des aubes, de manière à bénéficier d'une zone où la pression est plus faible qu'à l'orifice d'entrée.Les orifices de sortie d'air peuvent déboucher à l'extérieur des aubes au niveau de sorties d'orifices, lesdites sorties étant situées radialement dans une zone H3 comprise entre 85% et 100% de la dimension radiale des aubes, et mesurée depuis les pieds des aubes.

Avantageusement, lesdits orifices de sortie d'air sont situées seulement dans ladite zone H3 de la dimension radiale des aubes.

Les orifices de sortie d'air débouchent avantageusement sur les extrados des aubes.

Les orifices de sortie d'air peuvent être orientés vers le haut des aubes, de manière à ce que, en coupe axiale, l'angle entre l'axe radial des aubes et la direction d'éjection d'air soit compris entre 0° et 90°.

Les orifices de sortie d'air peuvent être orientés du côté de l'extrados de aubes, de manière à ce que, en coupe radiale, l'angle entre l'axe radial des aubes et la direction d'éjection d'air soit compris entre 0° et 90°.

Les hélices amont et aval peuvent avoir sensiblement le même diamètre externe.

Les hélices amont et aval peuvent être non carénées et contrarotatives.

Les hélices amont et aval peuvent être carénées et contrarotatives ou non contrarotatives.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en coupe axiale d'une turbomachine à hélices non carénées,
- la figure 2 est une vue schématique partielle en perspective de l'hélice amont d'une turbomachine à hélices non carénées selon la technique antérieure,
- la figure 3 est une vue schématique d'une turbomachine à hélices non carénées selon la technique antérieure,
- la figure 4 est une vue schématique en coupe axiale d'une aube de l'hélice amont d'une turbine à hélices non carénées selon l'invention,
- la figure 5 est une vue en coupe selon la ligne A-A de la figure 4,
- la figure 6 est une vue schématique d'une aube de l'hélice amont d'une turbine, vue du côté du bord d'attaque, sans et avec le circuit de prélèvement d'air de l'invention,
- la figure 7 est une vue schématique d'une aube de l'hélice amont d'une turbine, vue du côté de l'extrados, sans et avec le circuit de prélèvement d'air de l'invention,
- la figure 8 est une vue schématique axiale d'une aube, utile à la compréhension de l'invention, et
- la figure 9 est un diagramme illustrant la valeur de la flèche le long de l'axe radial de l'aube.

### DESCRIPTION DETAILLEE

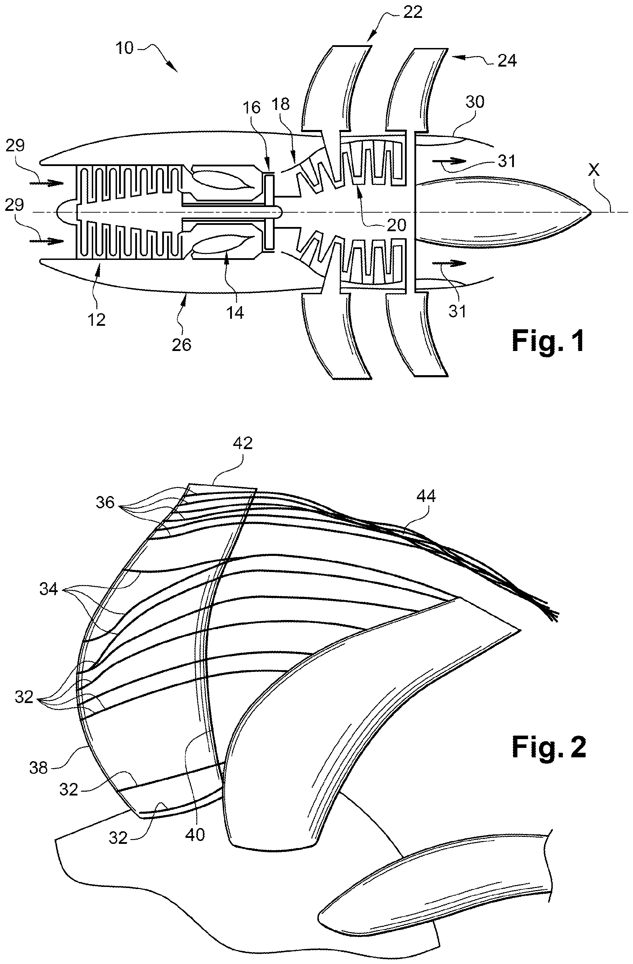

La figure 1 représente une turbomachine 10 à hélices non carénées (en anglais « open rotor » ou « unducted fan ») qui comporte d'amont en aval, dans le sens d'écoulement des gaz à l'intérieur de la turbomachine, un compresseur 12, une chambre annulaire de combustion 14, une turbine amont 16 haute pression, et deux turbines aval 18, 20 basse pression qui sont contrarotatives, c'est-à-dire qu'elles tournent dans des sens opposés autour de l'axe longitudinal X de la turbomachine.

Chacune de ces turbines aval 18, 20 est solidaire en rotation d'une hélice externe 22, 24 qui s'étend radialement à l'extérieur de la nacelle 26 de la turbomachine, cette nacelle 26 étant sensiblement cylindrique et s'étendant le long de l'axe X autour du compresseur 12, de la chambre de combustion 14, et des turbines 16, 18 et 20.

Le flux d'air 29 qui pénètre dans le compresseur 12 est comprimé puis est mélangé à du carburant et brûlé dans la chambre de combustion 14, les gaz de combustion étant ensuite injectés dans les turbines pour entraîner en rotation les hélices 22, 24 qui fournissent la majeure partie de la poussée générée par la turbomachine. Les gaz de combustion (flèches 31) sortent des turbines et sont enfin expulsés à travers une tuyère 30 pour augmenter cette poussée.

Les hélices 22, 24 sont disposées coaxialement l'une derrière l'autre. De façon connue, chacune de ces hélices 22, 24 comporte une pluralité d'aubes qui sont régulièrement réparties autour de l'axe X de la turbomachine, chaque aube s'étendant sensiblement radialement et comportant un bord amont d'attaque, un bord aval de fuite, une extrémité radialement interne formant le pied de l'aube, et une extrémité radialement externe formant la tête de l'aube.

L'hélice amont 22 a sensiblement le même diamètre que l'hélice aval 24 de façon à ce que ces hélices fournissent la même poussée en fonctionnement et que la totalité du flux d'air passant entre les aubes de l'hélice amont passe également entre les aubes de l'hélice aval.

La figure 2 est une vue schématique partielle en perspective de l'hélice amont 22 d'une turbomachine de la technique antérieure, et représente l'évolution des lignes de courant sur une aube de cette hélice. Les lignes de courant 32, 34, 36 passent entre les aubes de l'hélice et suivent plus ou moins le profil de ces aubes, depuis les bords d'attaque 38 jusqu'aux bords de fuite 40 de ces aubes.

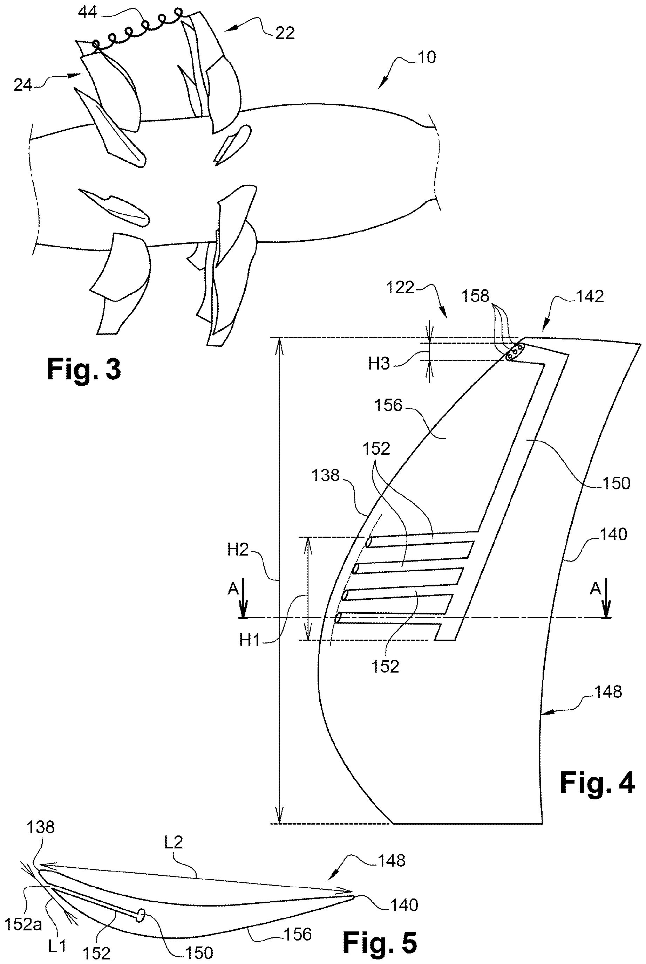

Les lignes de courant 32 qui s'écoulent sur les parties d'extrémité radialement internes des aubes sont sensiblement parallèles entre elles. Au contraire, les lignes de courant 34, 36 qui s'écoulent sur les parties d'extrémité radialement externes ont tendance à converger les unes vers les autres, ce phénomène étant de plus en plus intense à mesure que l'on se rapproche des têtes 42 des aubes. Les lignes de courant 36 qui passent au niveau des têtes des aubes s'enroulent les unes autour des autres et forment des tourbillons 44 qui viennent impacter sur les aubes de l'hélice aval 24 (figure 3), ces impacts étant à l'origine de nuisances sonores très importantes.

L'invention vise à réduire, à la source, l'intensité du tourbillon qui se développe au niveau des lignes de courant 34 des aubes de l'hélice amont 22, en aspirant ce tourbillon avant qu'il ne se lie au tourbillon de tête formé par les lignes de courant 36. L'invention vise également à réduire l'intensité du tourbillon de tête.

L'invention propose d'équiper les aubes de l'hélice amont 22 d'orifices d'aspiration ou de prélèvement d'air dans les couches limites des aubes, dans des zones centrales des extrados proches des bords d'attaque 38, l'air prélevé étant ensuite éjecté à l'extérieur de l'hélice amont 22 pour déstructurer les tourbillons 42 de plus faible intensité qui se forment en têtes d'aube.

Tel qu'illustré aux figures 4 et 5, les aubes de l'hélice amont 122 comprennent au moins une cheminée interne 150 de circulation d'air qui communique d'une part avec des orifices 152 de prélèvement d'air traversant les parois latérales des aubes et débouchant sur les extrados 156 de ces aubes, et d'autre part avec des orifices 158 de sortie d'air prélevé, qui débouchent à proximité des têtes 142 des aubes. Les orifices 152 de prélèvement d'air vont permettre d'aspirer le tourbillon dès qu'il commence à se développer, notamment entre 50% et 60% de la dimension radiale (l'envergure) H2 des aubes. Ainsi, le tourbillon généré par les aubes de l'hélice amont 122 sera d'une énergie moindre et d'un diamètre réduit, et la section de tourbillon qui impacte l'aube de l'hélice aval sera ainsi réduite. Le bruit d'interaction sera ainsi fortement réduit.

Pour que l'ensemble des orifices 152 de prélèvement d'air soit actif, c'est-à-dire pour qu'ils aspirent bien le tourbillon, il faut une différence de pression positive entre l'entrée des orifices 152 et l'endroit où ils débouchent. Pour cela, chaque orifice 152 de prélèvement d'air se présente sous la forme d'un canal qui est relié à une cheminée interne 150 qui chemine à l'intérieur de l'aube et qui débouche à proximité de son sommet 142, par exemple à proximité du bord d'attaque, et sur l'extrados 156, où la pression est plus faible qu'au niveau des entrées 152a des orifices 152.

Une solution pour la réalisation des ensembles orifices 152 de prélèvement d'air - cheminée 150 est l'utilisation de fibres dites fibres fugitives. Ce sont des fibres tissées en trois dimensions, typiquement des fibres de carbone, maintenues entre elles par de la résine, et qui sont ensuite dissoutes par un procédé chimique pour former lesdits ensembles. On pourrait également envisager de tisser les aubes 148 autour de tuyaux de faibles diamètres et dans une matière semblable à celle des fibres fugitives afin de les dissoudre par le même procédé chimique. Le diamètre D de ces réalisations sera dimensionné en fonction du débit d'aspiration nécessaire pour réduire l'intensité du tourbillon du bord d'attaque.

Les cheminées internes 150, par exemple au nombre de une par aube, ont une forme allongée en direction radiale et sont sensiblement parallèles à la forme radiale des aubes 148.

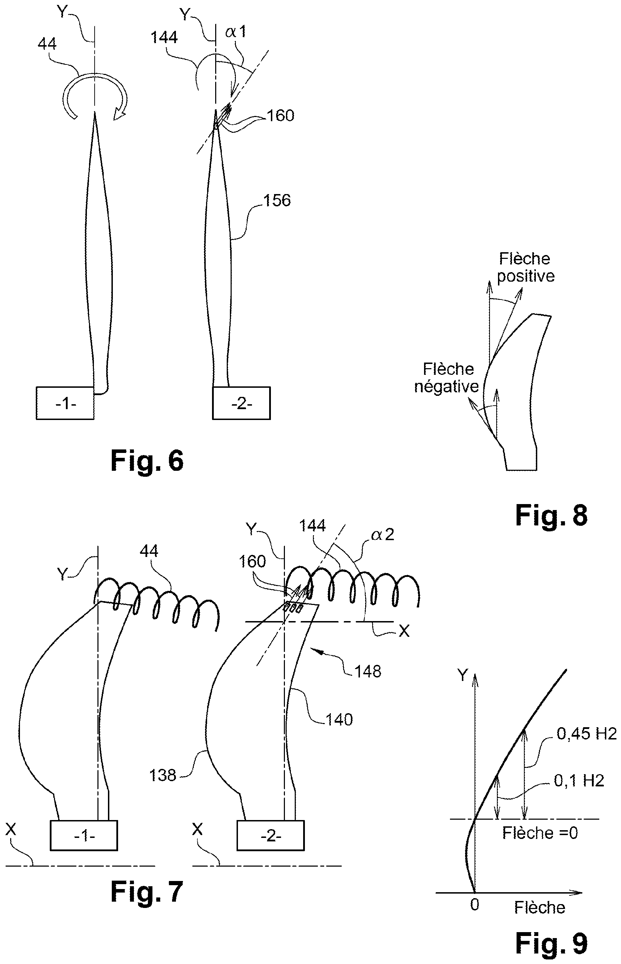

Les entrées 152a des orifices 152 de prélèvement d'air sont radialement situés dans une zone H1 comprise entre 10% et 45% de la hauteur H2 de l'aube, soit entre 0.1 H2 et 0.45 H2 (figures 7 et 9), et mesurée au-dessus du zéro de flèche. On définit le zéro de flèche comme étant la hauteur radiale de l'aube pour laquelle la tangente du bord d'attaque est radiale, c'est-à-dire parallèle à l'axe radial Y (figures 8 et 9). L'axe radial Y est orthogonal à l'axe longitudinal X de la turbomachine. Les sorties des orifices 158 de sortie d'air prélevé sont avantageusement situées dans une zone H3 comprise entre 85% et 100% de la hauteur de l'aube, et mesurée depuis le pied de l'aube.

Pour une meilleure performance de l'aspiration, il convient de conserver une différence de pression optimale. A cet effet, les entrées 152a des orifices 152 de prélèvement d'air sont avantageusement situées axialement dans une zone L1 comprise entre 0% et 30%, et notamment entre 10% et 30%, de la corde locale L2, mesurée depuis le bord d'attaque 138. Par corde locale, on entend la corde mesurée à la hauteur radiale de l'entrée 152a considérée. La corde L2 est ainsi, pour une hauteur d'entrée d'orifice 152a donnée, le chemin le plus court / la droite qui relie le bord d'attaque 138 au bord de fuite 140. De la même façon, les sorties des orifices 158 de sortie d'air prélevé sont avantageusement situées axialement dans une zone comprise entre 0% et 60% (de préférence entre 0% et 15%) de la corde locale, mesurée depuis le bord d'attaque. Le 0% de la zone correspond à des sorties d'orifices 158 de sortie d'air situées sur le bord d'attaque.

Selon l'invention, les orifices d'entrée d'air 152a sont situées seulement dans la zone H1 et L1 de l'aube 148 et les orifices de sortie d'air 158 sont situés seulement dans la zone H3 de façon à réduire efficacement les tourbillons de bord d'attaque de l'aube amont avant qu'ils ne se lient au tourbillon de tête de l'aube aval.

Le tourbillon de bord d'attaque se forme au niveau du bord d'attaque 138 comme son nom l'indique et tend à s'en éloigner et fur et à mesure qu'il se déplace selon la hauteur de l'aube. L'objectif est d'aspirer/réduire l'énergie de ce tourbillon et d'envoyer l'écoulement vers le haut de l'aube avec une direction qui suit la flèche de l'aube.

L'éjection de l'écoulement doit aussi aider à réduire l'intensité du tourbillon de tête d'aube et éloigner radialement sa position en s'opposant à sa direction d'écoulement. Tel qu'illustré aux figures 6 et 7, dans la configuration 1 (sans le circuit de prélèvement d'air) et dans la configuration 2 (avec le circuit prélèvement d'air), le tourbillon d'extrémité d'aube 144 est moins énergétique dans la configuration 2 que dans le tourbillon 44 dans la configuration 1 et génère donc moins de pertes, ce qui permet d'augmenter le rendement de la turbomachine. De plus, l'intensité du tourbillon 144 est réduite dans la configuration 2 et le tourbillon 144 est éloigné radialement dans la configuration 2, ce qui permet d'éviter que le tourbillon 144 n'impacte l'aube aval. On évite ainsi d'augmenter le rayon de l'aube aval pour gagner en performance ou réduire le bruit d'interaction entre l'hélice amont et l'hélice aval.

L'angle α₁, α₂ d'éjection d'air en tête d'aube est avantageusement orienté vers le bord de fuite 140 de l'aube 148 et également vers le haut de l'aube 148. La direction d'éjection d'air est illustrée par les flèches 160 (figures 6 et 7).

Cet angle α₁, α₂ d'éjection d'air, par rapport à l'axe longitudinal X de la turbomachine, ou de manière équivalente par rapport à l'axe radial Y, est ainsi avantageusement compris entre 0° et 90°. Tel qu'illustré à la figure 7, l'angle α₂ d'éjection est d'environ 50° par rapport à l'axe longitudinal X. Tel qu'illustré à la figure 6, l'éjection d'air se fait avantageusement du côté de l'extrados 156. L'angle α₁ entre l'axe radial Y de l'aube et la direction d'éjection d'air peut être compris entre 0° et 90°. Il est de l'ordre de 40° sur la figure 6.

L'invention présente ainsi plusieurs avantages :
- une diminution du bruit d'interaction du tourbillon de bord d'attaque : gain acoustique,
- une diminution du bruit d'interaction du tourbillon d'extrémité d'aube : gain acoustique,
- une diminution des pertes du tourbillon de bord d'attaque : gain en performance de la turbomachine,
- une diminution des pertes du tourbillon d'extrémité d'aube : gain en performance de la turbomachine.

Le système selon l'invention réduit la couche limite qui se développe à mi-envergure sur l'extrados de l'aube amont en plaçant les orifices d'aspiration entre 10% et 45% de la hauteur de l'aube au-dessus du zéro de flèche et à proximité du bord d'attaque, entre 10% et 30% de corde. On réduit ainsi le tourbillon à sa source au niveau du ventre de l'aube. Les orifices de sortie d'air débouchent avantageusement sur l'extrados des aubes amont, à proximité des bords d'attaque et des sommets des aubes, ce qui permet de réduire l'intensité du tourbillon de tête, au plus près de l'endroit où il se crée.

Les avantages de l'invention sont :
- une réduction de l'énergie du tourbillon de tête, grâce aux trous qui débouchent le plus près possible de l'endroit où les tourbillons de tête se créent, au niveau du bord d'attaque de l'aube amont,
- une réduction du décollement sur l'extrados de la pale amont, grâce aux trous d'aspiration positionnés dans l'aube,
- une réduction du bruit d'interaction sur les points basse vitesse, en réduisant le tourbillon qui se crée au niveau du ventre de l'aube, grâce à l'aspiration de la couche limite sur l'extrados à cette envergure de l'aube.
L'intensité du tourbillon de tête est également réduite par le soufflage en tête d'aube.

Dans la description qui précède, les hélices amont et aval de la turbomachine sont décrites comme étant non carénées et contrarotatives dans une turbomachine. L'invention n'est toutefois pas limitée à cette configuration et concerne également les turbomachines comprenant des hélices amont et aval carénées, qu'elles soient contrarotatives ou non-contrarotatives.

## Revendications

1. Turbomachine, d'axe longitudinal (X), comprenant deux hélices externes (122) coaxiales, respectivement amont (122) et aval (24), au moins certaines des aubes (148) de l'hélice amont (122) comprenant au moins une cheminée interne (150) de circulation d'air communiquant d'une part avec des orifices de prélèvement d'air (152) dans les couches limites des aubes (148), et communiquant d'autre part à son extrémité radialement externe avec des orifices de sortie d'air (158), **caractérisée en ce que** les orifices de prélèvement d'air (152) débouchent au niveau d'entrées d'orifices (152a) sur les extrados (156) des aubes (148), les entrées (152a) des orifices de prélèvement d'air étant situées radialement uniquement dans une zone (H1) comprise entre 10% et 45% de la dimension radiale (H2) des aubes (148), mesurée au-dessus et depuis la hauteur radiale des aubes pour laquelle la tangente du bord d'attaque (138) des aubes est orthogonale à l'axe longitudinal (X), les entrées (152a) des orifices de prélèvement d'air étant situées uniquement dans une zone (L1) comprise entre 0% et 30% de la corde locale (L2) des aubes (148), mesurée à la hauteur desdites entrées (152a) et depuis les bords d'attaque (138) des aubes (148).

2. Turbomachine selon la revendication 1, **caractérisée en ce que** ladite au moins une cheminée interne (150) de circulation d'air est sensiblement radiale.

3. Turbomachine selon la revendication 1 ou 2, **caractérisée en ce que** les orifices de prélèvement d'air (152) ont une section allongée ou oblongue.

4. Turbomachine selon l'une des revendications 1 à 3, **caractérisée en ce que** les orifices de sortie d'air (158) débouchent à l'extérieur des aubes (148) au niveau de sorties d'orifices, lesdites sorties d'orifices étant situées dans une zone comprise entre 0% et 60% de la corde locale des aubes, mesurée à la hauteur desdites sorties et depuis les bords d'attaque (138) des aubes (148).

5. Turbomachine selon l'une des revendications 1 à 4, **caractérisée en ce que** les orifices de sortie d'air (158) débouchent à l'extérieur des aubes (148) au niveau de sorties d'orifices, lesdites sorties étant situées radialement dans une zone (H3) comprise entre 85% et 100% de la dimension radiale (H2) des aubes (148), et mesurée depuis les pieds des aubes.

6. Turbomachine selon la revendication 5, **caractérisée en ce que** lesdits orifices de sortie d'air (158) sont situés seulement dans ladite zone (H3) de la dimension radiale des aubes (148).

7. Turbomachine selon l'une des revendications 1 à 6, **caractérisée en ce que** les orifices de sortie d'air (158) débouchent sur les extrados (152) des aubes (148).

8. Turbomachine selon la revendication 7, **caractérisée en ce que** les orifices de sortie d'air (158) sont orientés vers le haut des aubes (148), de manière à ce que, en coupe axiale, l'angle (α₂) entre l'axe radial (Y) des aubes et la direction d'éjection d'air soit compris entre 0° et 90°.

9. Turbomachine selon la revendication 7 ou 8, **caractérisé en ce que** les orifices de sortie d'air (158) sont orientés du côté de l'extrados (156) de aubes (148), de manière à ce que, en coupe radiale, l'angle (α₁) entre l'axe radial (Y) des aubes (148) et la direction d'éjection d'air soit compris entre 0° et 90°.

10. Turbomachine selon l'une des revendications 1 à 9, **caractérisée en ce que** les hélices amont et aval (122) ont sensiblement le même diamètre externe.

11. Turbomachine selon l'une des revendications 1 à 10, **caractérisée en ce que** les hélices amont et aval (122) sont non carénées et contrarotatives.

12. Turbomachine selon l'une des revendications 1 à 10, **caractérisée en ce que** les hélices amont et aval (122) sont carénées et contrarotatives ou non contrarotatives.

## Patentansprüche

1. Turbomaschine mit einer Längsachse (X), die zwei koaxiale Außenpropeller (122), stromaufwärts (122) bzw. stromabwärts (24), umfasst,
wobei mindestens einige der Schaufeln (148) des stromaufwärtigen Propellers (122) mindestens einen inneren Luftzirkulationsschacht (150) umfassen, der einerseits mit Luftentnahmeöffnungen (152) in den Grenzschichten der Schaufeln (148) kommuniziert, und andererseits an seinem radial äußeren Ende mit Luftauslassöffnungen (158) kommuniziert, **dadurch gekennzeichnet, dass** die Luftentnahmeöffnungen (152) im Bereich von Einlassöffnungen (152a) auf den Saugseiten (156) der Schaufeln (148) münden, wobei die Einlässe (152a) der Luftentnahmeöffnungen radial nur in einer Zone (H1) zwischen 10% und 45% der radialen Abmessung (H2) der Schaufeln (148), über und ab der radialen Höhe der Schaufeln gemessen, bei denen die Tangente der Angriffskante (138) der Schaufeln zur Längsachse (X) orthogonal ist, liegen, wobei die Einlässe (152a) der Luftentnahmeöffnungen nur in einer Zone (L1) zwischen 0 % und 30 % der lokalen Sehne (L2) der Schaufeln (148), auf der Höhe der Einlässe (152a) und ab den Angriffskanten (138) der Schaufeln (148) gemessen, liegen.

2. Turbomaschine nach Anspruch 1, **dadurch gekennzeichnet, dass** der mindestens eine innere Luftzirkulationsschacht (150) im Wesentlichen radial ist.

3. Turbomaschine nach Anspruch 1 oder 2, **dadurch gekennzeichnet, dass** die Luftentnahmeöffnungen (152) einen länglichen oder langgestreckten Querschnitt aufweisen.

4. Turbomaschine nach einem der Ansprüche 1 bis 3, **dadurch gekennzeichnet, dass** die Luftauslassöffnungen (158) an der Außenseite der Schaufeln (148) im Bereich von Öffnungsauslässen münden, wobei die Öffnungsauslässe in einer Zone zwischen 0 % und 60% der lokalen Sehne der Schaufeln, auf der Höhe der Auslässe und ab den Angriffskanten (138) der Schaufeln (148) gemessen, liegen.

5. Turbomaschine nach einem der Ansprüche 1 bis 4, **dadurch gekennzeichnet, dass** die Luftauslassöffnungen (158) an der Außenseite der Schaufeln (148) im Bereich von Öffnungsauslässen münden, wobei die Auslässe radial in einer Zone (H3) zwischen 85 % und 100 % der radialen Abmessung (H2) der Schaufeln (148), und ab den Füßen der Schaufeln gemessen, liegen.

6. Turbomaschine nach Anspruch 5, **dadurch gekennzeichnet, dass** die Luftauslassöffnungen (158) nur in der Zone (H3) der radialen Abmessung der Schaufeln (148) liegen.

7. Turbomaschine nach einem der Ansprüche 1 bis 6, **dadurch gekennzeichnet, dass** die Luftauslassöffnungen (158) auf den Saugseiten (152) der Schaufeln (148) münden.

8. Turbomaschine nach Anspruch 7, **dadurch gekennzeichnet, dass** die Luftauslassöffnungen (158) so zur Oberseite der Schaufeln (148) ausgerichtet sind, dass im axialen Schnitt der Winkel (α₂) zwischen der radialen Achse (Y) der Schaufeln und der Luftausstoßrichtung zwischen 0° und 90° liegt.

9. Turbomaschine nach Anspruch 7 oder 8, **dadurch gekennzeichnet, dass** die Luftauslassöffnungen (158) auf Seite der Saugseite (156) der Schaufeln (148) so ausgerichtet sind, dass im radialen Schnitt der Winkel (α₁) zwischen der radialen Achse (Y) der Schaufeln (148) und der Luftausstoßrichtung zwischen 0° und 90° liegt.

10. Turbomaschine nach einem der Ansprüche 1 bis 9, **dadurch gekennzeichnet, dass** der stromaufwärtige und der stromabwärtige Propeller (122) im Wesentlichen den gleichen Außendurchmesser aufweisen.

11. Turbomaschine nach einem der Ansprüche 1 bis 10, **dadurch gekennzeichnet, dass** der stromaufwärtige und der stromabwärtige Propeller (122) keinen Mantel aufweisen und gegenläufig sind.

12. Turbomaschine nach einem der Ansprüche 1 bis 10, **dadurch gekennzeichnet, dass** der stromaufwärtige und der stromabwärtige Propeller (122) einen Mantel aufweisen und gegenläufig oder nicht gegenläufig sind.

## Claims

1. A turbomachine with a longitudinal axis (X), comprising two, respectively upstream (122) and downstream (24), coaxial outer propellers (122), at least some of the blades (148) of the upstream propeller (122) comprising at least one internal air circulation chimney (150) that communicates on the one hand with air-bleeding orifices (152) in the boundary layers of the blades (148), and communicates on the other hand with air outflow orifices (158) on the radially outer end thereof, **characterised in that** the air-bleeding orifices (152) open at the orifice inlets (152a) on the suction sides (156) of the blades (148), the inlets (152a) of the air-bleeding orifices being radially arranged only in an area (H1) contained between 10% and 45% of the radial dimension (H2) of the blades (148), measured above and from the radial height of the blades for which the tangent of the leading edge (138) of the blades is orthogonal to the longitudinal axis (X), the inlets (152a) of the air-bleeding orifices being arranged only in an area (L1) contained between 0% and 30% of the local chord (L2) of the blades (148), measured at the level of said inlets (152a) and from the leading edges (138) of the blades (148).

2. The turbomachine according to claim 1, **characterised in that** said at least one internal air circulation chimney (150) is substantially radial.

3. The turbomachine according to claim 1 or 2, **characterised in that** the air-bleeding orifices (152) have an elongated or oblong cross-section.

4. The turbomachine according to one of claims 1 to 3, **characterised in that** the air outflow orifices (158) opening at the outside of the blades (148) at the level of the orifice outlets, said orifice outlets being arranged in an area contained between 0% and 60% of the local chord of the blades, measured at the level of said outlets and from the leading edges (138) of the blades (148).

5. The turbomachine according to one of claims 1 to 4, **characterised in that** the air outflow orifices (158) open at the outside of the blades (148) at the orifice outlets, said orifice outlets being arranged radially in an area (H3) contained between 85% and 100% of the radial dimension (H2) of the blades (148), and measured from the roots of the blades.

6. The turbomachine according to claim 5, **characterised in that** said air outflow orifices (158) are arranged only in said area (H3) of the radial dimension of the blades (148).

7. The turbomachine according to one of claims 1 to 6, **characterised in that** the air outflow orifices (158) open at the suction side (152) of the blades (148).

8. The turbomachine according to claim 7, **characterised in that** the air outflow orifices (158) are oriented towards the top of the blades (148) so that, in axial section, the angle (α2) between the radial axis (Y) of the blades and the direction of air ejection is between 0° and 90°.

9. The turbomachine according to claim 7 or 8, **characterised in that** the air outflow orifices (158) are oriented on the side of the suction side (156) of the blades (148) in such a way that, in radial section, the angle (α1) between the radial axis (Y) of the blades (148) and the direction of air ejection is between 0° and 90°.

10. The turbomachine according to one of claims 1 to 9, **characterised in that** the upstream and downstream propellers (122) have substantially the same outer diameter.

11. The turbomachine according to one of claims 1 to 10, **characterised in that** the upstream and downstream propellers (122) are unducted and counter-rotating.

12. The turbomachine according to one of claims 1 to 10, **characterised in that** the upstream and downstream propellers (122) are ducted and counter-rotating or non-counter-rotating.
